# EUROPEAN PATENT APPLICATION

(11) **EP 2 079 234 A2**
(43) Date of publication of application: **15.07.2009**
(21) Application number: 08254055.0
(22) Date of filing: 18.12.2008
(51) Int. Cl.: H04N 5/445

(54) **Video searching apparatus, editing apparatus, video searching method, and program**

(30) Priority: 09.01.2008 JP 2008002658
(71) Applicant: Sony Corporation, Tokyo (JP)
(72) Inventor: Tokunaka, Junzo, Tokyo 108-0075 (JP)
(74) Representative: Horner, David Richard

(57) **Abstract**

A video searching apparatus for handling video data related to audio-text data. The video searching apparatus includes: a keyword input section inputting a user keyword; a keyword searching section searching the audio-text data for the keyword input by the keyword input section; and an information-display control section displaying a time line on a monitor and indent-displaying a keyword position searched by the keyword searching section on the time line.

## Description

### BACKGROUND OF THE INVENTION

The present invention relates to a video searching apparatus, an editing apparatus, a video searching method, and a program. More, particularly, the present invention relates to a video searching apparatus, etc., which handle video data related to audio-text data.

When a person searches a book in order to find out what is written on which part of the book, the person can search characters by reading the book diagonally or flipping the pages of the book. However, in a related-art world of moving images, in which video and audio have been the main recording information, it is difficult to search one material for a desired scene.

For example, in a related-art VTR (Video Tape Recorder), when a search is made for a video scene at a high-speed, it is possible to roughly recognize a moving image. However, it is difficult to check the contents for each frame in detail. Also, when a search is made for a video scene at such a high-speed, it is difficult to hear a speech sound, because the speech sound is muted. Even if the speech sound can be heard, the speech sound is too fast to be understood.

To give a supplementary explanation on a speech sound, for example, a relatively slow playback speed three to four times normal speed is a borderline of whether the contents of video can be understood by listening to the speech sound of the video with a human sense of hearing. Thus, there have been no measures to confirm the contents of a speech sound at a high speed.

For example, as disclosed in International Patent Publication No. WO96/32722, in a non-linear editing apparatus, a plurality of thumbnails are displayed to be selected as a method of displaying for a search. However, in general, in a non-linear editing apparatus, thumbnails of consecutive images are not displayed, but thumbnails are displayed at intervals. It is therefore difficult to search for a desired scene from these thumbnails.

Also, the amount of information of a thumbnail image is overwhelmingly larger than that of a speech sound. Assuming that the thumbnail images of all the frames (29.94 frames/s) are displayed on a monitor, it is difficult for a person to search for a desired video scene by viewing the thumbnail images at random.

Also, even if a scene in the vicinity of a desired video scene is found, it is still difficult to determine a final edit point. That is to say, in a monitor of a non-linear editing apparatus, a sound envelope waveform (vertical: amplitude, horizontal: time axis) is generally displayed on a time line in order to serve for determining an edit point.

However, although a person can recognize a start point of a sound and strength of a speech sound by viewing a sound envelope waveform, it has been difficult for the person to understand the meaning or the contents of the speech sound. Thus, an edit operator has been determining an edit point by pre-viewing a material near the edit point in real time and confirming the meaning or the contents of the speech sound.

For example, Japanese Unexamined Patent Application Publication No. 2005-94709 has disclosed a way of displaying a title of each block constituting a moving image or the other text information on a list in sequence of time. When text information on each block is displayed on a list in such a manner, even if the edit operator finds a scene in the vicinity of a desired video scene from the relevant text information, it is necessary for the edit operator to preview the material near the edit point in real time, etc., in order to determine a final edit point.

As described above, in the related-art non-linear editing apparatus, etc., a large number of man-hours have been necessary for confirming the contents of a moving-image material including video and audio as main recording information, determining edit points, and editing in accordance with a production intention.

It is desirable to make an easy search for a desired video scene to be an edit point, for example.

### SUMMARY OF THE INVENTION

Embodiments of the present invention provide a video searching/editing technique for video data related to audio-text data in which a search is made of the audio-text data for an input keyword, and a searched keyword position is displayed on a time line. Thereby, the video searching apparatus enables a user to easily search for a desired video scene.

According to an embodiment of the present invention, there is provided a video searching apparatus for handling video data related to audio-text data, including: a keyword input section inputting a user keyword; a keyword searching section searching the audio-text data for the keyword input by the keyword input section; and an information-display control section displaying a time line on a monitor and indent-displaying a keyword position searched by the keyword searching section on the time line.

The present invention handles video data which is related to audio-text data. Here, audio-text data means text data representing the contents of sound by an audio signal corresponding to a video signal. The video data and the audio-text data are stored, for example, in a data storage section, such as an HDD, etc., for example.

When the user enters a keyword into the keyword input section, the keyword searching section searches the audio-text data for the keyword. For example, a keyword is entered into the keyword input section using a graphical user interface screen displayed on the monitor. In this manner, the user can easily and correctly enter a keyword using the graphical user interface screen.

After the keyword search is performed as described above, the information-display control section displays the searched keyword position on a time line, for example video time line. In this manner, the user can easily search for a desired video scene using the display of the position of the keyword entered by the user on the video time line.

One embodiment of this invention, for example, further includes: a position selection section selecting a predetermined keyword position from keyword positions displayed on the time line displayed on the monitor in accordance with a user operation; and an image-display control section displaying a representative image corresponding to an audio text portion including the keyword position selected by the position selection section on the basis of the video data. In this case, the user can easily confirm the video scene corresponding to each keyword position by the display, on the monitor, of a representative screen corresponding to the position of the keyword selected by the user.

Also, one embodiment of this invention, for example, further includes: a position selection section selecting a predetermined keyword position from keyword positions displayed on the time line displayed on the monitor in accordance with a user operation; a playback instruction section instructing to play back in accordance with a user operation; and in a state of a predetermined keyword position selected by the position selection section, when the playback instruction section instructs to play back, an image-display control section displaying a video corresponding to the predetermined keyword position on the basis of the video data. In this case, the user can easily confirm the video scene corresponding to each keyword position by the display, on the monitor, of video corresponding to the position of the keyword selected by the user.

Through use of the present invention, it is possible to handle video data related to audio-text data, to search the audio-text data for an input keyword, and to display a searched keyword position on a time line. Thus, the user is allowed to easily search for a desired video scene.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram illustrating an example of a configuration of a non-linear editing apparatus according to an embodiment of the present invention;
Figs. 2(a) and 2(b) are diagrams illustrating exemplary structures of a video index file and a video data file, respectively;
Figs. 3(a) and 3(b) are diagrams illustrating exemplary structures of an audio-text index file and an audio-text data file, respectively;
Figs. 4(a) and 4(b) are diagrams illustrating a conceptual structure in which audio-text data is interwoven with time code in a video recording apparatus;
Fig. 5 is a flowchart illustrating an example of keyword-search processing by a CPU;
Fig. 6 is a diagram illustrating an example of a user-interface screen displayed on a monitor;
Fig. 7 is a diagram illustrating an example of a user-interface screen displayed on a monitor;
Fig. 8 is a schematic diagram illustrating a state of comparing a keyword and an audio text with time as the horizontal axis;
Fig. 9 is a flowchart illustrating an example of video-scene search processing by the CPU;
Fig. 10 is a schematic diagram illustrating a keyword-search processing flow as viewed from an editing application program;
Fig. 11 is a schematic diagram illustrating a video-scene-search processing flow as viewed from an editing application program; and
Fig. 12 is a schematic diagram illustrating a video-scene-search processing flow as viewed from an editing application program.

### DESCRIPTION OF THE PREFERRED EMBODIMENTS

In the following, a description will be given of an embodiment of the present invention with reference to the drawings.

### "Configuration of Editing Apparatus"

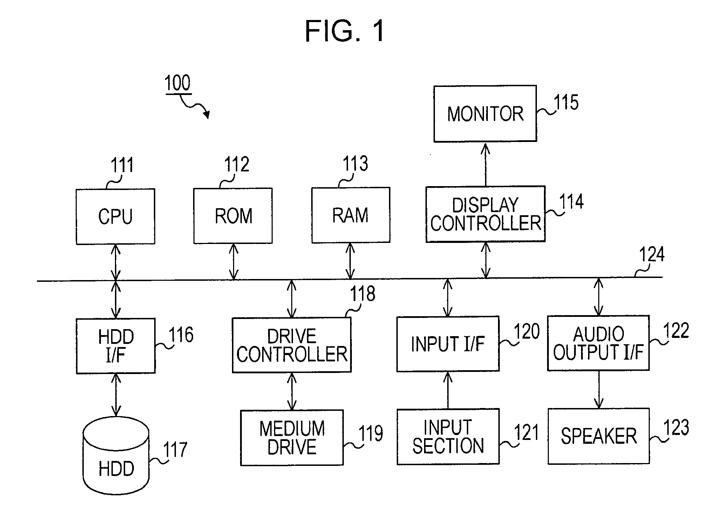

Fig. 1 illustrates an exemplary configuration of a non-linear editing apparatus 100 according to an embodiment. The non-linear editing apparatus 100 has a CPU (Central Processing Unit) 111, a ROM (Read Only Memory) 112, a RAM (Random Access Memory) 113, a display controller 114, a monitor 115, an HDD interface 116, an HDD 117, a drive controller 118, a medium drive 119, an input interface 120, an input section 121, an audio output interface 122, a speaker 123, and a system bus 124.

The CPU 111, the ROM 112, and the RAM 113 are mutually connected through the system bus 124. Further, the display controller 114, the HDD interface 116, the drive controller 118, the input interface 120, and the audio output interface 122 are connected to the system bus 124.

The CPU 111 controls the operation of each section of the non-linear editing apparatus 100. The CPU 111 controls the operation of each section by loading programs stored in the ROM 112 or the HDD 117 to the RAM 113 and executing the programs.

The monitor 115 is connected to the system bus 124 through the display controller 114. The monitor 115 includes, for example, a LCD (Liquid Crystal Display), a PDP (Plasma Display Panel), etc. The display controller 114 controls images displayed on the monitor 115 and a GUI display under the control of the CPU 111.

The HDD 117 is connected to the system bus 124 through the HDD interface 116. The HDD 117 stores programs for controlling the CPU 111, video data and audio data as an edit material, and the like.

In this regard, in this embodiment, video data which is related to audio text data is handled. The audio text data is text data representing audio contents of the audio data corresponding to the video data. Accordingly, the video data of each moving image contents held in the HDD 117 has additional audio text data in addition to the audio data corresponding to the video data. In this case, a relationship among video data, audio data, and audio text data is established through time code.

The medium drive 119 is connected to the system bus 124 through the drive controller 118. The medium drive 119 is a driving function section supporting each kind of recording media, and performs recording and playback operations on the recording medium. The recording media include, for example, an optical disc, such as a CD, a MD, a CD-R, a CD-RW, a DVD, a DVD-R, a DVD-RW, a Blu-ray Disc, etc., or a memory card. The medium drive 119 is used for receiving input of video data, etc., as an edit material, and for outputting the video data, etc., after editing.

The input section 121 is connected to the system bus 124 through the input interface 120. The input section 121 is used for the user to input various kinds of operation input and to enter data. The input section 121 includes a keyboard, a mouse, a remote commander, and the other input devices.

The speaker 123 is connected to the system bus 124 through the audio output interface 122.

### "Index File and Data File of Video and Audio Text"

Next, a description will be given of the video data and the audio text data, which are held in the HDD 117 of the non-linear editing apparatus 100 shown in Fig. 1.

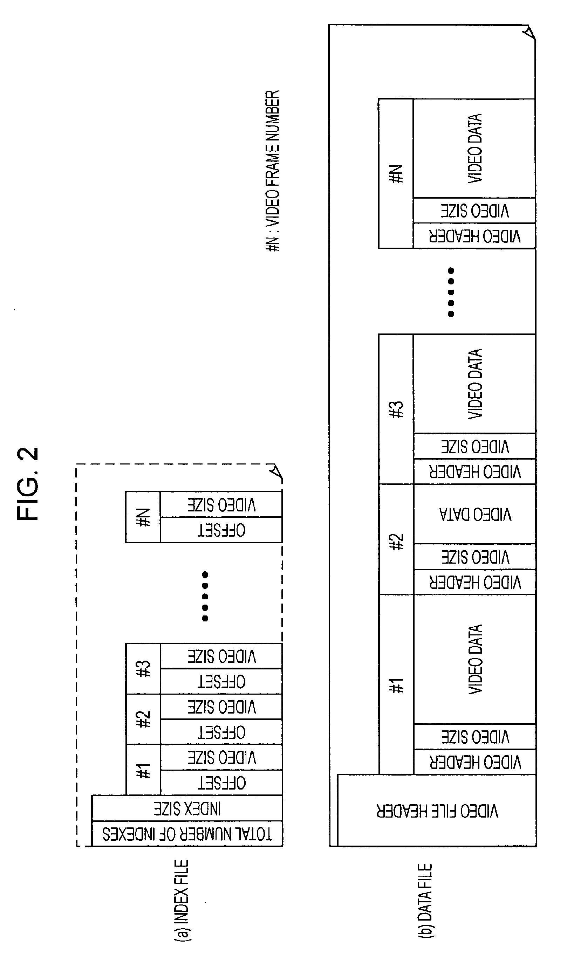

Figs. 2(a) and 2(b) are exemplary structures of a video index file and a video data file, respectively. The index file may be created as an independent file from the data file. The index file may also be included in the data file. In this example, the index file is created as an independent file from the data file.

The video index file is management data indicating which frame of data is recorded in which address of the HDD 117. The video index file includes the total number of indexes, the sizes of index areas, the sizes of all the video frame data included in the data file, and the addresses in the video data file.

The video data file includes all the video frame data and the sizes thereof. Also, the video data file includes a video file header. Further, the video data is often compressed, and the video data file includes information for decompressing the compressed video data.

In this regard, although the illustration and the description will be omitted, the audio data is also recorded in synchronism with the time code (TC) in the same manner. In this embodiment, the time code is all recorded continuously, and is information equivalent to the video frame number.

Originally, the time code is information on time, minute, second, and a frame. A material recorded on a recording medium by a camcorder, etc., includes a plurality of clips. Here, a clip means a recording portion from a recording start (REC START) to a recording pause (REC PAUSE). The clip and the time code of the clip may be discontinuous. Alternatively, the time code may be duplicated between different recording media.

When these materials are input from the medium drive 119 to be recorded into the HDD 117 by the non-linear editing apparatus 100 shown in Fig. 1, consecutive frame numbers are assigned for recording in addition to the original time code. In this case, management may be performed using the frame numbers, 0, 1, 2,..., or continuous time code may be newly assigned for recording.

An "offset" in the index file in Fig. 2 means a distance from a reference point assuming that the address of the reference point is 0, for example, which is a so-called an offset address. The start address of each video frame can be obtained from a value of the "offset", and the end address of each video frame can be obtained from the "offset" and "video size (the amount of data is different for each frame, because of compression recording".

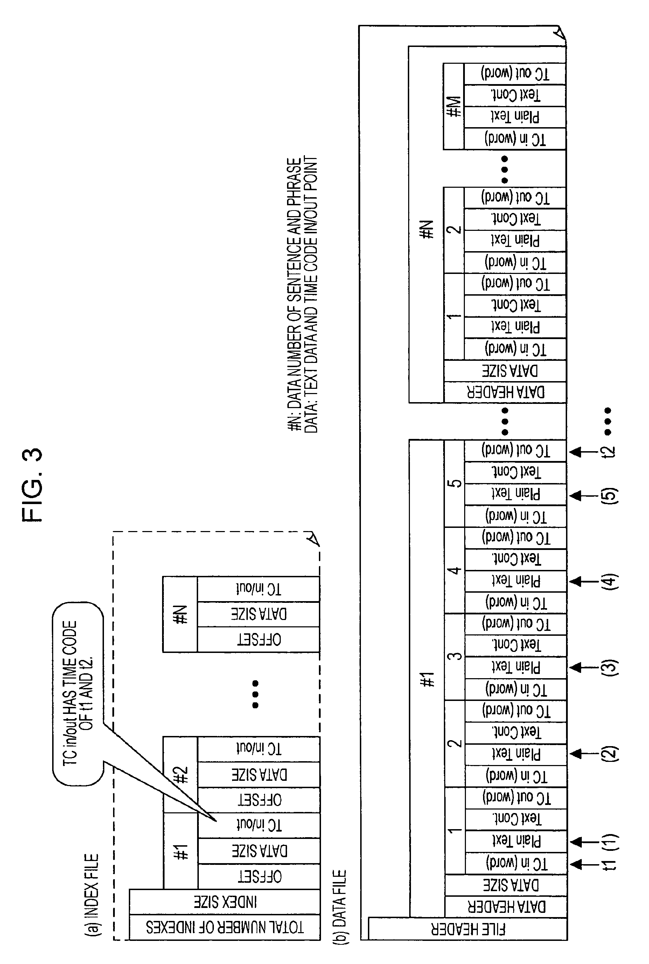

Figs. 3(a) and 3(b) are exemplary structures of an audio-text index file and an audio-text data file, respectively. The index file may be created as an independent file from the data file. The index file may also be included in the data file. In this example, the index file is created as an independent file from the data file. The index file includes the total number of indexes, the sizes of index areas, time code of in point and out point for each sentence or phrase, and the sizes of audio-text data.

The audio-text data file includes the text data of characters included in each sentence or each phrase together with the time code of in point and out point of the words. Also, the audio-text data file includes a data header and a data size for each sentence or phrase. Also, the audio-text data file includes an audio-text file header.

The CPU 111, as a search system, can get an address of the audio-text data file corresponding to time code from the audio-text index file, and can read the data file of the audio text by accessing this address. Also, the CPU 111, as a search system, can search a keyword and its position (time code) of an audio text by comparing the data of the read audio text and the keyword.

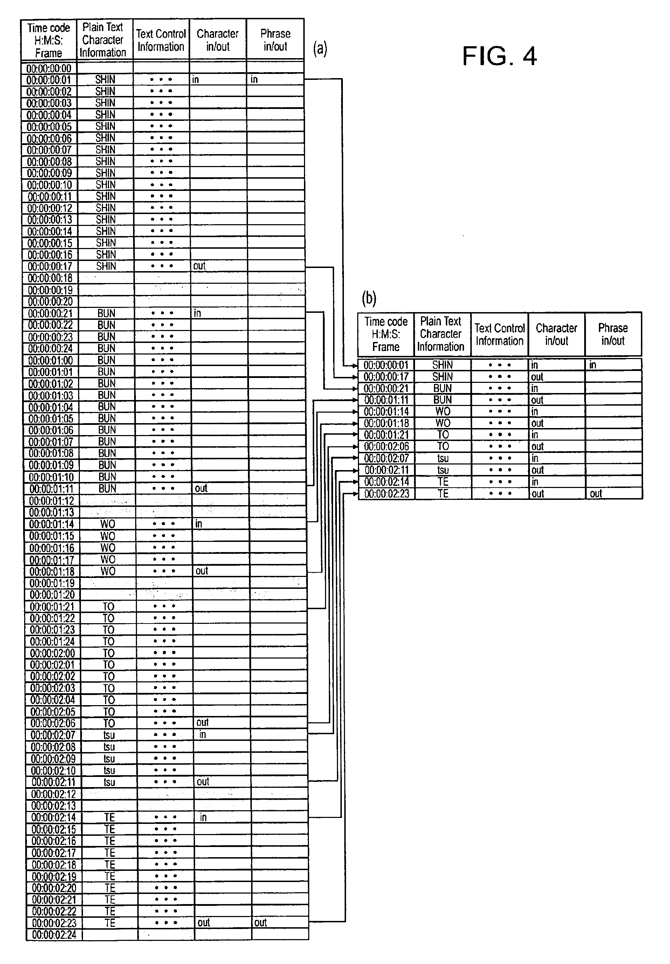

Fig. 4(a) illustrates a conceptual structure in which audio-text data is interwoven with time code in a video recording apparatus. Here, the time code indicates continuous time and frame numbers. Here, it is assumed that discontinuous time code and the same time code are not included. In Fig. 4(a), the time code is described in a 625/50 format as an example, and is 25 frames/s.

A "plain text" is a general file format or a character string format for handling sentences on a computer. Here, for the convenience of description, a "character" itself is written. In reality, a plain text is represented by a text code (two bytes data for a Chinese character). However, detailed text code and control information is omitted here, because the purpose of the description is to explain the structure of the time code and the text data.

Fig. 4(a) illustrates an example of a Japanese sentence, "SHINBUN WO TO-TSU-TE (Hand me a newspaper.)". A time axis is defined in the vertical direction from top to bottom in the figure. A human voice is represented by silence (gray) and sound (character information). The production of a human voice has a certain time period, and thus a certain time period (00:00:00:01 to 00:00:00:17) indicates a period in which a sound of "SHIM" is produced. "Text control information" in the figure indicates text control information not expressed by a character. For example, a tab, a vertical tab, a linefeed, a page break, a file-end mark, a byte order mark, etc. Here, the details are omitted.

"Character in/out" indicates an in-point and an out-point of a character, which are connected with time code. "Phrase" indicates a phrase or a sentence constituted by characters. "Phrase in/out" indicates an in-point and an out-point of a phrase. In this manner, by defining an in-point and an out-point for each character or for each sentence, it becomes possible to control various moving images and sound. That is to say, it becomes possible to display a video thumbnail image corresponding to a certain text character, to play back the corresponding sound, to cue up at the beginning (a phrase in-point) of a sentence including the relevant text characters to play back, and to stop playback at an out-point, etc. Also, it becomes possible to search a certain text sentence (for example, "SHINBUN (newspaper)"), and to display a plurality of matched places in a material. Further, it is also possible to search for a plurality of sentences as a set, and to search for candidate places including a similar sentence.

Fig. 4(b) is a diagram produced by extracting the essence, that is to say, an in-point and an out-point of a character from Fig. 4(a). A data file of an audio text is constituted in this state (refer to Fig. 3(b)).

### "Moving Image Search by Keyword using Audio Text"

Next, a description will be given on moving-image search in the non-linear editing apparatus 100 shown in Fig. 1. When the user edits an imported moving-image material in the non-linear editing apparatus 100, the user is allowed to search for a desired video scene using an audio text in order to determine an edit point.

### Keyword Search

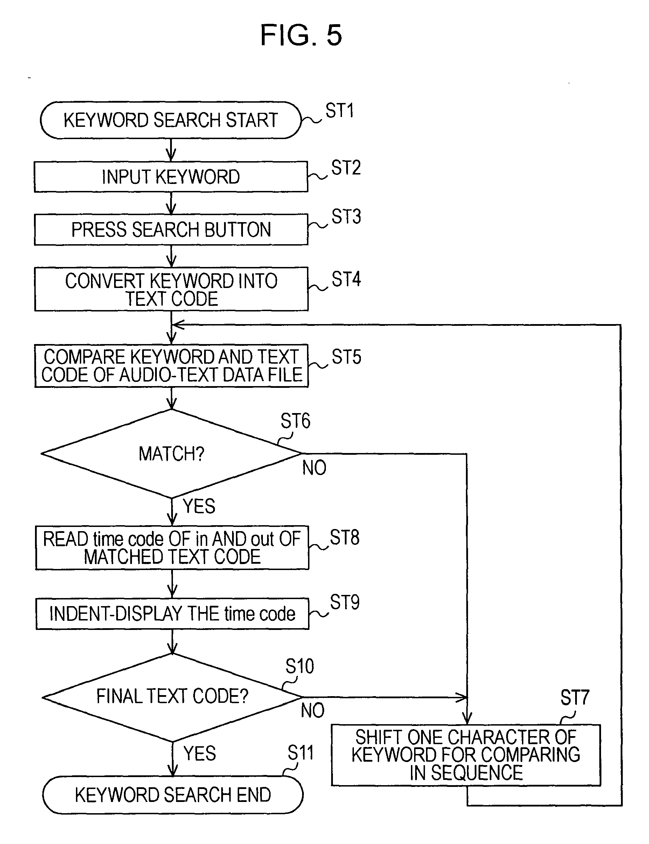

The user (edit operator) enters a character string to be a keyword, and thus a desired video scene is efficiently selected from the material for confirmation. Thereby, a pre-process of edit operation is performed. A description will be given of keyword search processing by the CPU 111 using a flowchart in Fig. 5.

In step ST1, the CPU 111 starts keyword search processing, and then proceeds to the processing of step ST2. In step ST2, when a keyword is entered by the user's operation of the input section 121, the CPU 111 proceeds to the processing of step ST3.

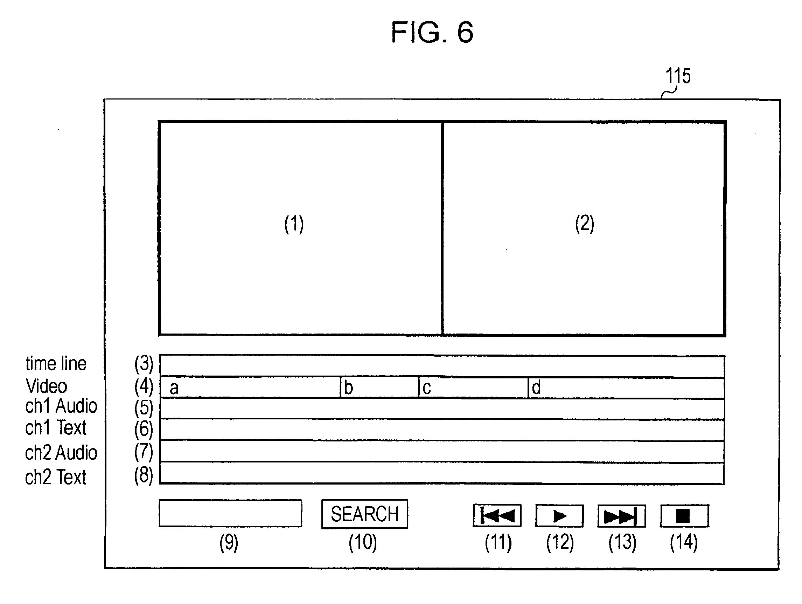

Fig. 6 illustrates a user-interface screen displayed on the monitor 115. The user-interface screen is provided with two image-display positions (1) and (2) for displaying an image in the upper side. The user-interface screen is provided with a time line (3), a video time line (4), audio time lines (5) and (7), and audio-text time lines (6) and (8) in the lower side. Marks a, b, c, and d indicate clips on the video time line (4). On the audio time lines (5) and (7), the waveforms of the audio signals corresponding to individual clips displayed on the video time line (4) are displayed. Also, on the audio-text time lines (6) and (8), the contents of the sound corresponding to individual clips displayed on the video time line (4) are displayed.

Also, the user-interface screen is provided with a keyword frame (9) for entering a keyword at the time of keyword search, and further provided with a search button (10) for instructing a start of search, a previous button (11), a playback button (12), a next button (13), and a playback stop button (14) in the lower side.

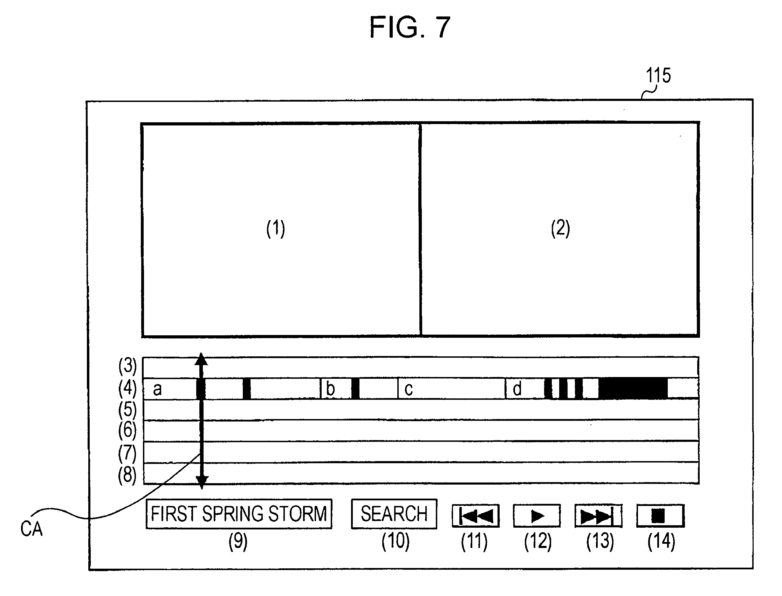

The user enters a keyword (in this example, "first spring storm") into the keyword frame (9) of the user-interface screen as shown in Fig. 6 using a mouse and keyboard of the input section 121. This GUI program supports Japanese language. When a keyword is entered, the keyword is displayed in the keyword frame (9) as shown in Fig. 7.

In step ST3, when the search button (10) on the user-interface screen is pressed by the user's operation of the input section 121, the CPU 111 proceeds to the processing of step ST4. In step ST4, the CPU 111 converts a keyword into a text code.

Next, in step ST5, the CPU 111 reads the text code of the keyword and the text code of the audio-text data in Fig. 3 into the RAM 113, and compares both of the text code. In step ST6, the CPU 111 determines whether matched or not. If not matched, in step ST7, the CPU 111 shifts one character of the keyword for sequential comparison, then returns to step ST5, and repeats the same operation as described above.

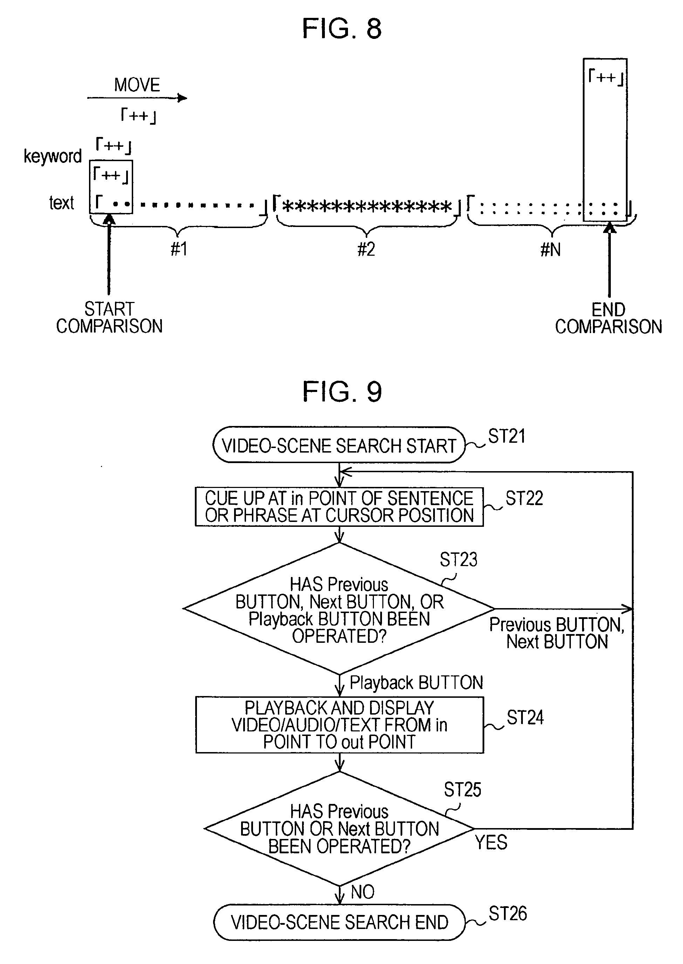

Figs. 3(a) and 3(b) are text data of phrases or sentences of #1, #2,...#N. When keyword search is performed, a sequential comparison is made between the target "text code" and "1, 2, 3, 4, 5 of #1,..., the last text code of #N in Fig. 3" in order to detect matched data. This processing is performed in the above-described steps ST5 to ST7. Fig. 8 schematically illustrates a state of comparing the keyword and the audio text with time as the horizontal axis.

When the CPU 111 determines that the data have matched in step ST6, the CPU 111 reads the in and out time code of the matched text code in step ST8. In step ST9, the CPU 111 performs indented display of the relevant time code. For example, the CPU 111 performs indented display of a position of the searched keyword on the video time line by a line (bar, circle, oval, or the like.) distinguished by color or brightness (refer to the video time line (4) in Fig. 7).

Here, the width of one line is automatically set to a width that can be viewed by the user (edit operator). That is to say, the width of one line is automatically set using the display width of a time line and the width of a unit time period as parameters. As a result, the user can change the width of the line displaying the matched place in accordance with the scale ratio of the time line. For example, the video time line is matched with the time width of one frame when the time width of one frame is expanded sufficiently to be visualized, but this is a rare case.

In this regard, in this embodiment, as shown in Fig. 7, the position of the searched keyword is displayed on the video time line (4). However, the position of the searched keyword may be displayed on the time line (3) in an indented form. Also, the indent display may be performed by indicating a frequency using a plurality of bars as shown in Fig. 7 or using a histogram (bar chart indicating frequencies).

Next, in step ST10, the CPU 111 determines whether a final text code has been reached. If not the final text code, in step ST7, the CPU 111 shifts one character of the keyword for sequential comparison, and then returns to the processing of step ST5. On the other hand, in step ST10, if the final text code has been reached, the CPU 111 terminates the keyword search in step ST11.

In a time line portion (refer to a clip d in Fig. 7) having a high frequency of keyword match, the indented display of each point of the matched keyword becomes continuous, and becomes a band state. Also, in a time line portion (refer to clips a and b in Fig. 7) having a low frequency of keyword match, the indented display is displayed by a bar. Thus, the user can understand the relationship between the statistical distribution of desired keyword points and adjacent clips at a glance.

In this regard, if there are a plurality of keywords, the CPU 111 automatically selects a method of indentation capable of distinguishing the keywords by individually different colors or brightness to display the keywords. Also, the flowchart in Fig. 5 is an example, and the present invention is not limited to this. For example, in an alternative embodiment of the method, places (time code) where a same phrase (characters) is located are searched, and the places are included in a table in advance, and then the places are read from the table by a search execution command.

### Confirmation of Desired Scene

As described above, the user (edit operator) can search for a desired video scene from the position of each searched keyword, and determine edit points. A description will be given of search processing of a video scene by the CPU 111 using a flowchart in Fig. 9.

In step ST21, the CPU 111 starts search processing of a video scene, and then proceeds to the processing of step ST22. In step ST22, the CPU 111 cues up to an in point of a sentence or a phrase at the cursor position, and displays the corresponding thumbnail.

For example, in the user-interface screen in Fig. 7, a cursor CA is display in a state perpendicular to the video time line (4), etc., as shown in the figure. The position of the cursor CA is fixed. First, a first keyword position out of the searched keyword positions is displayed in a state matched with the cursor CA. In this case, if the first keyword position corresponds to #1 sentence or phrase in the audio-text data file shown in Fig. 3(b), the CPU 111 cues up to an in-point (t1), reads the thumbnail corresponding to the time code of the in-point (t1) from, for example HDD 117, and displays the thumbnail at the image display position (1) of the user-interface screen in Fig. 7.

Next, in step ST23, the CPU 111 determines whether the next button (13) or the previous button (11) on the user-interface screen has been pressed by the user's operation of the input section 121. Further, a determination is made on whether the playback button (12) has been pressed. If the next button (13) or the previous button (11) has been pressed, the CPU 111 returns to step ST22.

In this case, if the next button (13) is pressed, the CPU 111 changes the user-interface screen such that the cursor CA matches the next keyword position, cues up to an in-point of a sentence or a phrase at the cursor position, and displays the corresponding thumbnail. In this regard, when the cursor CA is at the position of the last keyword, even if the next button (13) is pressed, a same state is maintained.

On the other hand, if previous button (11) is pressed, the CPU 111 changes the user-interface screen such that the cursor CA matches the previous keyword position, cues up to an in-point of a sentence or a phrase at the cursor position, and displays the corresponding thumbnail. In this regard, when the cursor CA is at the position of the first keyword, even if the previous button (11) is pressed, a same state is maintained.

Also, in step ST23, if the playback button (12) is pressed, in step ST24, the CPU 111 controls the HDD 117 to play back the video, the audio, and the audio text from the in-point to the out-point. In this case, the played-back video is displayed at the image display position (2) of the user-interface screen in Fig. 7. Also, the audio output in synchronism with the playback video is displayed in an enlarged scale on the audio time line (6). The audio text in synchronism with the playback video is displayed in an enlarged scale on the text time line (8). Thereby, the user (edit operator) can confirm the video, the audio, and the audio text corresponding to the keyword position at which the cursor CA is located. In this regard, an audio waveform is displayed on the audio time line (6).

For example, if the keyword position corresponds to #1 sentence or phrase in the audio-text data file shown in Fig. 3(b), the user can confirm the video, the audio, and the audio text corresponding to the in-point (t1) to the out-point (t2) of the #1 sentence or phrase. In this regard, after the playback has completed, a still image of the out-point is displayed at the image display position (2) of the user-interface screen in Fig. 7.

Next, in step ST25, the CPU 111 determines whether the next button (13) or the previous button (11) on the user-interface screen has been pressed by the user's operation of the input section 121. If one of these buttons has been pressed, the CPU 111 returns to the processing of step ST22, and the same processing as described above is repeated. On the other hand, in step ST25, if neither the next button (13) nor the previous button (11) has been operated, the CPU 111 terminates the search processing of a video scene in step ST26.

The user (edit operator) can search for a desired video scene to be an edit point by searching a video scene on the basis of the above-described flowchart in Fig. 9. In this regard, the user (edit operator) can drag a band portion having a high frequency of the keyword position on the video time line (4) in Fig. 7 using the mouse to perform indented display of a predetermined section, and can confirm the video and the sound contents by playing back the section continuously.

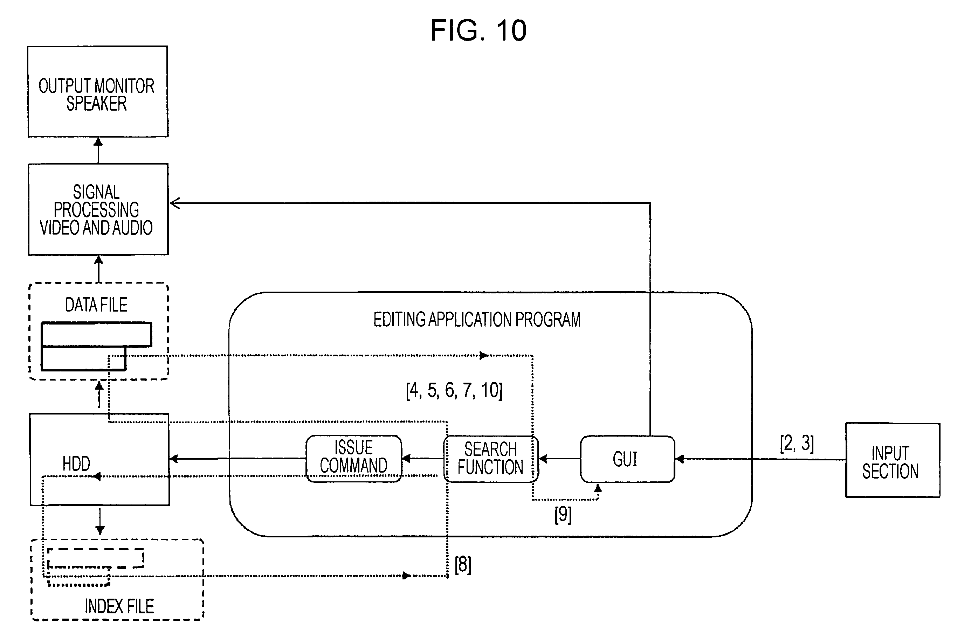

Fig. 10 schematically illustrates the keyword-search processing flow as viewed from an editing application program. In this regard, [n] corresponds to a step number of the flowchart in Fig. 5. A "GUI" included in the editing application program performs GUI display including an input operation. A "search function" converts the text characters of the keyword, which is GUI-inputted, into text code, compares the data file and the text code, reads the matched time code, and GUI-displays it. A "command issue" reads the index file, obtains the address on the data file to be read, and issues a command, such as cue-up, playback, stop, etc., to the storage.

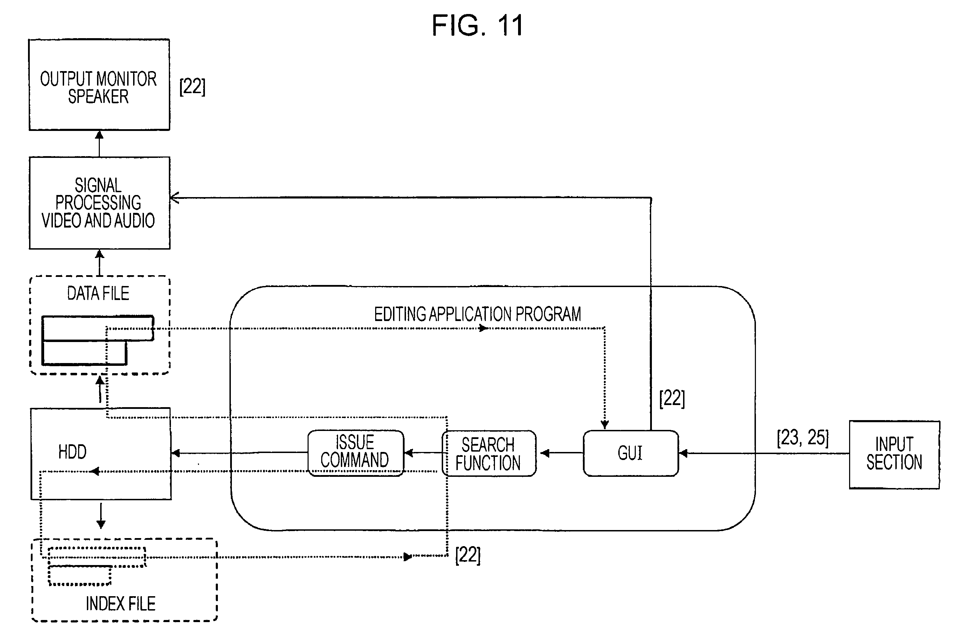

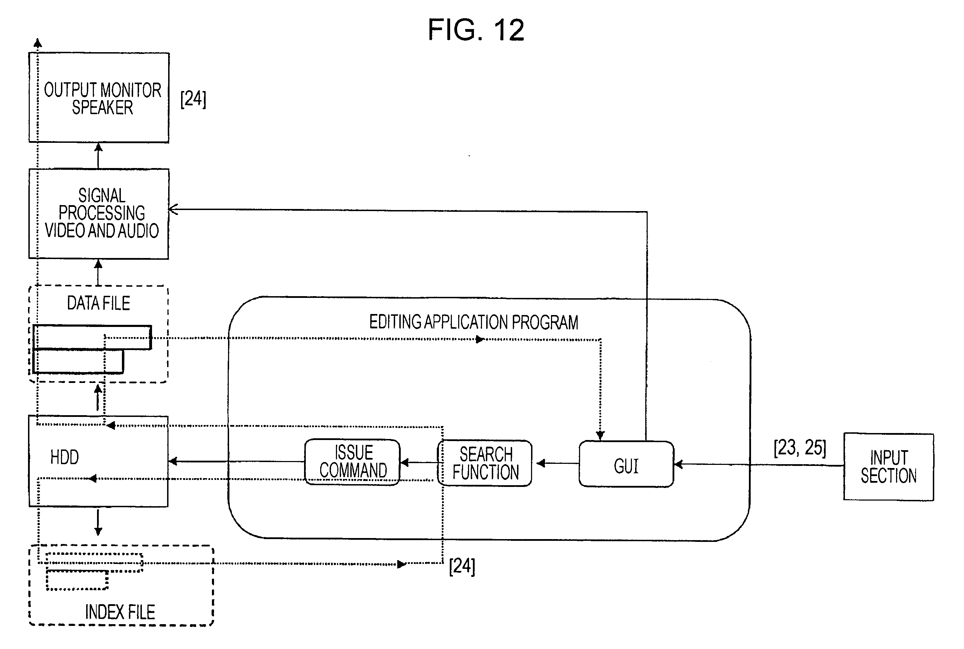

In the same manner, Figs. 11 and 12 schematically illustrate a video-scene-search processing flow as viewed from an editing application program. In this regard, [n] corresponds to a step number of the flowchart in Fig. 9.

As described above, the non-linear editing apparatus 100 shown in Fig. 1 handles video data which is related to audio-text data. A keyword input by the user (edit operator) is searched from the audio-text data, and a searched keyword position is displayed on a video time line (refer to Fig. 7). Thus, the user is allowed to easily search for a desired video scene to be an edit point, for example.

Also, in the non-linear editing apparatus 100 shown in Fig. 1, the user (edit operator) inputs a keyword using a graphical user interface screen (refer to Figs. 6 and 7) displayed on the monitor 115. Thus, the user can easily and correctly enter the keyword.

Also, in the non-linear editing apparatus 100 shown in Fig. 1, when the user (edit operator) selects a predetermined keyword position from the keyword positions displayed on the video time line on the monitor 115, the selected representative screen (thumbnail) is displayed at the image display position (1) of the monitor 115. Thus, the user (edit operator) can easily confirm the video scene corresponding to each keyword position.

Also, in the non-linear editing apparatus 100 shown in Fig. 1, when the user (edit operator) selects a predetermined keyword position from the keyword positions displayed on the video time line on the monitor 115, and instructs to play back, the video corresponding to the predetermined keyword position is displayed on the basis of the video data at the image display position (2) of the monitor 115. Thus, the user (edit operator) can easily confirm the video scene corresponding to each keyword position.

In this regard, in the above-described embodiment, a simple keyword search using one word (in Japanese), for example, a "first spring storm" is shown. However, it is possible to perform keyword search with a conditional expression using a single word and a plurality of words. For example, if a conditional expression is "Japanese and US baseball" or "Ichiro", "Japanese and US baseball" and "Ichiro" are searched from the audio text, and they are displayed with individually different color or indented with a same color. Also, for example, a conditional expression is "weather" and "women", a search is made by "weather" with a woman's voice, and the result is displayed in an indented form. In this case, voice is determined to be male or female by fast Fourier transform. Also, for example, a phrase search is made using "first spring storm arises" as a conditional expression. Also, for example a search is made in English using "weather forecast" as a conditional expression.

Also, as a result of a search made as described above, that is to say, "keyword" or the time code, etc., of the keyword portion may be saved to be used for a secondary purpose.

Also, keyword search may be carried out not only by a complete match of the text portion. Text portions having a high matching rate may be searched, and the result may be displayed separately in color in descending order of the matching rate, for example.

Also, in the above-described embodiment, the present invention is applied to a non-linear editing apparatus. However, the present invention can be applied to other video apparatuses which handle video data recorded and having a relationship with audio-text data in the same manner.

The present invention contains subject matter related to Japanese Patent Application JP 2008-002658 filed in the Japanese Patent Office on January 9, 2008, the entire contents of which are incorporated herein by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A video searching apparatus for handling video data related to audio-text data, comprising:
a keyword input section inputting a user keyword;
a keyword searching section searching the audio-text data for the keyword input by the keyword input section; and
an information-display control section displaying a time line on a monitor and indent-displaying a keyword position searched by the keyword searching section on the time line.

2. The video searching apparatus according to Claim 1,
wherein the keyword input section has a graphical user interface screen displayed on the monitor, and the graphical user interface screen includes a frame section in which the keyword is input.

3. The video searching apparatus according to Claim 1,
wherein the information-display control section displays a bar having a width in accordance with a frequency of appearances of the keyword at the keyword position searched by the keyword searching section.

4. The video searching apparatus according to Claim 1, further comprising: a position selection section selecting a predetermined keyword position from keyword positions displayed on the time line displayed on the monitor in accordance with a user operation; and
an image-display control section displaying a representative image corresponding to an audio text portion including the keyword position selected by the position selection section on the basis of the video data.

5. The video searching apparatus according to Claim 1, further comprising: a position selection section selecting a predetermined keyword position from keyword positions displayed on the time line displayed on the monitor in accordance with a user operation;
a playback instruction section instructing to play back in accordance with a user operation; and
in a state of a predetermined keyword position selected by the position selection section, when the playback instruction section instructs to play back, an image-display control section displaying a video corresponding to the predetermined keyword position on the basis of the video data.

6. An editing apparatus having a video searching section handling video data related to audio-text data, the video searching section comprising:
a keyword input section inputting a keyword in accordance with a user operation;
a keyword searching section searching the audio-text data for the keyword input by the keyword input section; and
an information-display control section displaying a time line on a monitor and displaying a keyword position searched by the keyword searching section on the time line.

7. A method of searching video for handling video data related to audio-text data, the method comprising the steps of:
inputting a keyword in accordance with a user operation;
searching the audio-text data for the input keyword; and
information-display controlling displaying a time line on a monitor and indent-displaying a position of the searched keyword on the time line.

8. A computer program which when executed on a computer performs a method of searching video for handling video data related to audio-text data as claimed in claim 7.
